# EUROPEAN PATENT SPECIFICATION

(11) **EP 2 599 271 B1**
(45) Date of publication and mention of the grant of the patent: **04.03.2015**
(21) Application number: 11749433.6
(22) Date of filing: 31.08.2011
(51) Int. Cl.: H04L 12/58

(54) **INSTANT MESSAGING USING MULTIPLE INSTANCES OF A CLIENT**
SOFORTNACHRICHTENÜBERMITTLUNG MIT MEHREREN CLIENT-INSTANZEN
MESSAGERIE INSTANTANÉE UTILISANT DE MULTIPLES INSTANCES D'UN CLIENT

(30) Priority: 02.09.2010 GB 201014613
(43) Date of publication of application: 05.06.2013
(73) Proprietor: Skype, Dublin 2 (IE)
(72) Inventor: OBERLE, Vincent, EE10155 Tallinn (EE); POTOV, Aleksei, Mountain View CA 94040 (US)
(74) Representative: Driver, Virginia Rozanne
(86) International application number: PCT/EP2011/065038
(87) International publication number: WO 2012/028657

(56) References cited:
- US-A1- 2003 101 343
- US-A1- 2005 132 009
- US-A1- 2007 100 952
- US-A1- 2010 131 599

## Description

### Field of the Invention

The present invention relates to instant messaging.

### Background

Instant messaging provides real-time, text-based communication between two or more users over a communication system. In order to engage in instant messaging, each user executes a client at a user terminal in the communication system. The client is a piece of software which is distributed to the users which, when executed at a user terminal in the communication system, allows the user to engage in instant messaging over the communication system.

Users can engage in instant messaging conversations over the communication system in which instant messages are transmitted between the users. An instant messaging conversation may include two or more users.

As an example, a first user may engage in an instant messaging conversation with a second user. The first user can input a text message to a first client executing at his user terminal and the first client can transmit the text as an instant message to a second client at the second user terminal. The second client can interpret the instant message and display the text message to the second user. The time taken for the transmission of the instant message over the communication system is short enough (e.g. ≤ 2 seconds) for the users to perceive the communication as occurring in real-time. The clients at the first and second user terminals can store the instant messages that have been transmitted (and received) during the conversation. In this way, the first client can maintain a chat history at the first user terminal of instant messages sent in conversations in which the first user has engaged. This allows the first user to retrieve instant messages from previous conversations at the first user terminal. Similarly, the second client can maintain a chat history at the second user terminal of instant messages sent in conversations in which the second user has engaged. This allows the second user to retrieve instant messages from previous conversations at the second user terminal.

US 2005/0132009 discloses, in one embodiment, a centralised model in which a server manages and stores the text transcripts of all instant message sessions and routes all instant message transcripts to all client devices for all the users involved in the session.

US 2003/0101343 discloses a messaging communication system which includes a plurality of messaging clients. A first messaging client establishes a first communication connection operating using a plurality of client data. The first messaging client transfers the plurality of client data to a second messaging client. The second messaging client establishes a second communication connection operating using the plurality of client data.

US 2007/0100952 discloses a method for playing back an instant messaging session, the method comprising: during an instant messaging session where one or more instant messaging events occur, determining a timestamp associated with the one or more instant messaging events; recording an indication of the one or more instant messaging events and their associated timestamps; receiving one or more playback commands; and in response to the received playback commands, displaying playback of the one or more instant messaging events based on their associated timestamps.

### Summary

It is becoming more common for a user to log into their account with an instant messaging communication system using different instances of a client installed on different user terminals. This provides greater flexibility for the user in using the instant messaging communication system. However, the inventors have realised that this extra flexibility means that the user might not always be able to access the chat history of instant messaging conversations that he has previously engaged in over the communication system.

For example, in the prior art systems, if a user engages in an instant messaging conversation using a first instance of the client at a first user terminal then the instant messages transmitted (and received) during the conversation are stored at the first user terminal. When the user then uses a different instance of the client executing at a different user terminal then he cannot gain access to the instant messages of the previous conversation. The inventors have realised that this can be detrimental to the user's experience of using the instant messaging communication system.

According to a first aspect of the invention there is provided an instant messaging method for communicating over a communication system between a first user at a first user terminal of the communication system and a second user at a second user terminal of the communication system, the method comprising: transmitting instant messages over the communication system in both directions between the first and second user terminals, wherein the instant messages constitute a conversation between the first and second users; and storing each instant message of the conversation in a store at a server of the communication system, wherein the server is accessible from a third user terminal of the communication system such that the first user can retrieve, at the third user terminal, each instant message of the conversation from the store.

There is therefore provided a method for storing each instant message of a conversation on a server in the communication system. The full chat history for a user (i.e. every instant message from every conversation in which the user has participated in the communication system) may be stored at the server. Since the server is accessible from other user terminals in the communication system, the user can subsequently use another user terminal in the communication system and still gain access to each instant message of a previous conversation in which the user has participated in the communication system. This means that the full chat history can be received by other instances of the client that were offline at the time that the messages were sent/received in the conversation.

In preferred embodiments the method further comprises transmitting a read status message (or "consumption horizon message") for the conversation from the first user terminal to the server, said read status message (or "consumption horizon message") indicating which of the instant messages of the conversation have been displayed to the first user; and storing the read status message in the store. Furthermore, preferably the method further comprises the first user retrieving at least one of the instant messages of the conversation, at the third user terminal, from the store. Preferably the method further comprises transmitting the read status message (or "consumption horizon message") for the conversation from the server to the third user terminal, such that it can be determined at the third user terminal which of the instant messages of the conversation have been displayed to the first user. The consumption horizon message may be stored at the server along with the instant messages of the conversation such that the read status of each instant message of the conversation may be synchronised across multiple instances of the client. This means that the first user can retrieve instant messages of the conversation at the third user terminal and the third user terminal can display the instant messages to the first user in such a way that the first user can determine which of the instant messages of the conversation have already been displayed to him (even if they were displayed to him when he was using another instance of the client at another user terminal, e.g. at the first user terminal). The read status message may be considered to indicate which of the instant messages of the conversation have been read by the first user. Instant messages may be received at the client but not displayed to the user, in which case the read status message will not indicate that the instant messages have been displayed to the user. An instant message may be received at the client but not displayed to the user if, for example, a user is viewing one conversation while an instant message is received that relates to another conversation, the instant message will not be marked as read (using the read status message) until the user selects the other conversation and the instant message is displayed. Similarly, in the case where the user receives a plurality of instant messages in the same conversation, but the user does not scroll down to view the instant messages, the instant messages that are not displayed will not be marked as read by the read status message.

The instant messages of the conversation may be transmitted between the first and second user terminals via the server. The instant messages of the conversation may be transmitted between the first and second user terminals on a point-to-point route over the communication system. A point-to-point route over the communication system is a route that does not go via the server. In preferred embodiments each instant message of the conversation is transmitted via the server and on the point-to-point route over the communication system. This ensures reliable delivery of the instant messages and allows instant messages to be delivered to different destinations, e.g. to instances of the client, such as legacy versions of the client, that are only able to receive instant messages directly (i.e. on a point-to-point route) and to instances of the client, such as thin clients, that are only able to receive instant messages from a server. In embodiments in which the instant message is sent via the server in addition to being sent on the point-to-point route, the instant message will be delivered to the client on the user's user terminal even in the case where the client is only able to connect to one of the server or the client of the other user in the conversation.

In alternative embodiments the instant messages of the conversation are only sent via the server and are not sent on the point-to-point route.

According to a second aspect of the invention there is provided a communication system for providing instant messaging between a first user and a second user, the communication system comprising: a first user terminal, usable by the first user; a second user terminal, usable by the second user; a third user terminal, usable by the first user; and a server comprising a store for instant messages, wherein the communication system is configured to: transmit instant messages in both directions between the first and second user terminals, wherein the instant messages constitute a conversation between the first and second users; and store each instant message of the conversation in the store at the server, and wherein the server is accessible from the third user terminal such that the first user can retrieve, at the third user terminal, each instant message of the conversation from the store.

The methods and communication systems of preferred embodiments advantageously allow for synchronised chat history and synchronised message read status among different instances of the client throughout the communication system.

### Brief Description of the Drawings

For a better understanding of the present invention and to show how the same may be put into effect, reference will now be made, by way of example, to the following drawings in which:
Figure 1 shows a communications network according to a preferred embodiment;
Figure 2 shows a schematic diagram of a user terminal according to a preferred embodiment;
Figure 3 shows a flow chart for an instant messaging method according to preferred embodiments;
Figure 4 illustrates a method of transmitting an instant message from a first client to a second client according to a preferred embodiment; and
Figure 5 shows a flow chart for a process of retrieving a chat history from the server according to a preferred embodiment.

### Detailed Description of Preferred Embodiments

Preferred embodiments of the invention will now be described by way of example only.

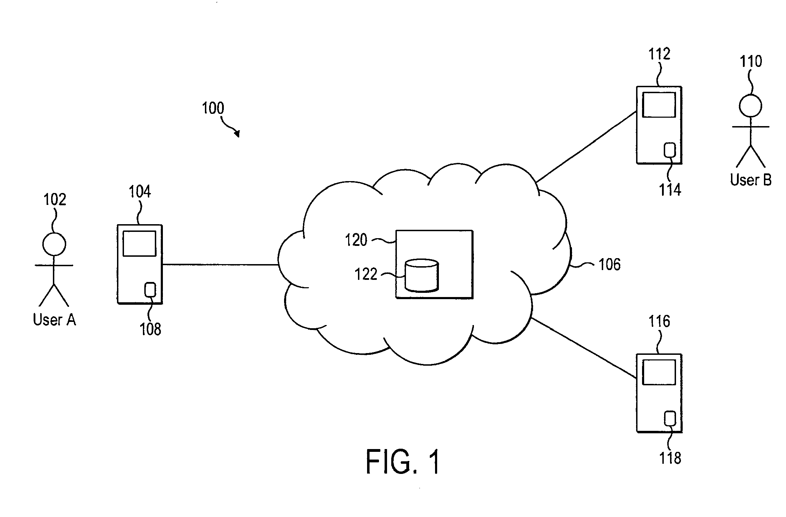

Reference is first made to Figure 1, which illustrates a packet-based communication system 100 of a preferred embodiment. A first user of the communication system (User A 102) operates a user terminal 104, which is shown connected to a communications network 106. The communications network 106 may for example be the Internet. The user terminal 104 may be, for example, a mobile phone, a personal digital assistant ("PDA"), a personal computer ("PC") (including, for example, Windows™, Mac OS™ and Linux™ PCs), a gaming device or other embedded device able to connect to the network 106. The user terminal 104 is arranged to receive information from and output information to the user 102 of the device. In a preferred embodiment the user terminal 104 comprises a display such as a screen and an input device such as a keypad, joystick, touch-screen, keyboard, mouse, microphone and/or webcam. As shown in Figure 1, the user terminal 104 is connected to the network 106.

Note that in alternative embodiments, the user terminal 104 can connect to the communication network 106 via additional intermediate networks not shown in Figure 1. For example, if the user terminal 104 is a mobile device, then it can connect to the communication network 106 via a cellular mobile network (not shown in figure 1), for example a GSM or UMTS network.

The user terminal 104 is running a communication client 108, provided by the software provider associated with the communication system 100. The communication client 108 is a software program executed on a local processor in the user terminal 104 which allows the user terminal 104 to engage in calls and instant messaging communication sessions over the network 106.

Figure 1 also shows a second user 110 (User B) who has a user terminal 112 which executes a client 114 in order to communicate over the network 106 in the same way that the user terminal 104 executes the client 108 to communicate over the network 106. Therefore users A and B (102 and 110) can communicate with each other over the communications network 106. There may be more users connected to the communications network 106, but for clarity only the two users 102 and 110 are shown connected to the network 106 in Figure 1. Figure 1 also shows a third user terminal 116 which can execute a client 118 in order to communicate over the network 106 in the same way that the user terminal 104 executes the client 108 to communicate over the network 106. Figure 1 also shows a server 120 in the communication system 100. The server 120 includes a store (e.g. a database) 122 for storing instant messages. Figure 1 shows the server 120 as a single node in the network 106, but in alternative embodiments, the sever 120 may comprise a plurality of nodes in the network 106. The plurality of nodes can be considered to be a server cluster. Similarly, Figure 1 shows the store 122 as a single database, whereas in alternative embodiments, the store 122 may comprise multiple databases which may reside on multiple servers or server clusters in the network 106.

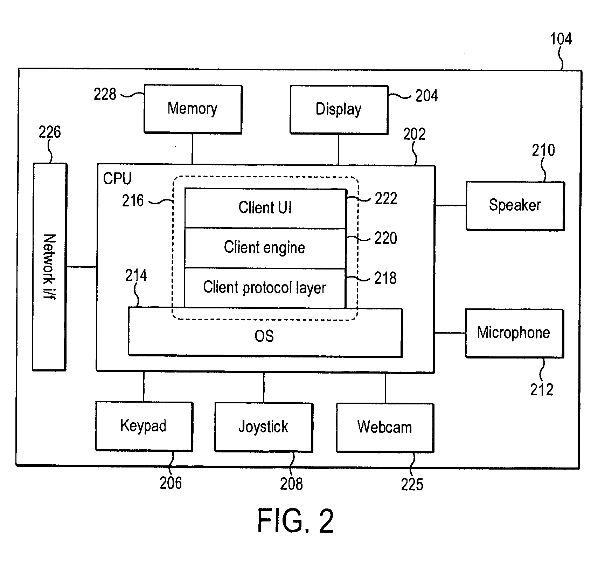

Figure 2 illustrates a detailed view of the user terminal 104 on which is executed client 108. The user terminal 104 comprises a central processing unit ("CPU") 202, to which is connected a display 204 such as a screen, input devices such as a keypad (or a keyboard) 206, a pointing device such as a joystick (or mouse) 208 and a webcam 225 for capturing video data. The display 204 may comprise a touch screen for inputting data to the CPU 202. An output audio device 210 (e.g. a speaker) and an input audio device 212 (e.g. a microphone) are connected to the CPU 202. The display 204, keypad 206, joystick 208, webcam 225, output audio device 210 and input audio device 212 are integrated into the user terminal 104. In alternative user terminals one or more of the display 204, the keypad 206, the joystick 208, webcam 225, the output audio device 210 and the input audio device 212 may not be integrated into the user terminal 104 and may be connected to the CPU 202 via respective interfaces. One example of such an interface is a USB interface. The CPU 202 is connected to a network interface 226 such as a modem for communication with the communications network 106 for communicating over the communication system 100. The network interface 226 may be integrated into the user terminal 104 as shown in Figure 2. In alternative user terminals the network interface 226 is not integrated into the user terminal 104.

Figure 2 also illustrates an operating system ("OS") 214 executed on the CPU 202. Running on top of the OS 214 is a software stack 216 for the client. The software stack shows a client protocol layer 218, a client engine layer 220 and a client user interface layer ("UI") 222. Each layer is responsible for specific functions. Because each layer usually communicates with two other layers, they are regarded as being arranged in a stack as shown in Figure 2. The operating system 214 manages the hardware resources of the computer and handles data being transmitted to and from the network via the network interface 226. The client protocol layer 218 of the client software communicates with the operating system 214 and manages the connections over the communication system 100. Processes requiring higher level processing are passed to the client engine layer 220. The client engine 220 also communicates with the client user interface layer 222. The client engine 220 may be arranged to control the client user interface layer 222 to present information to the user via a user interface of the client and to receive information from the user via the user interface.

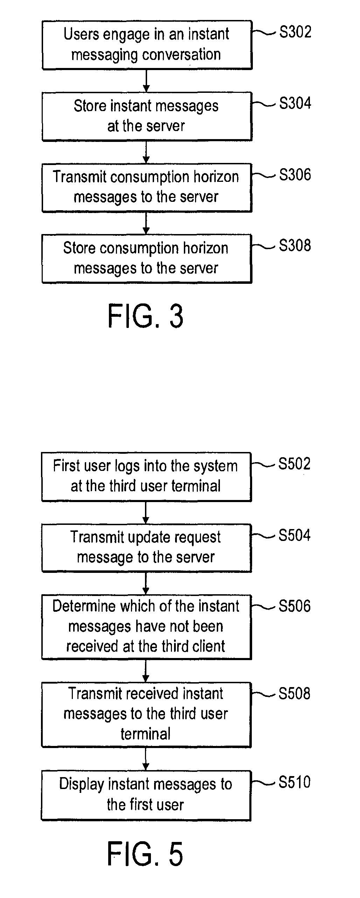

An instant messaging method according to preferred embodiments will now be described with reference to Figure 3. In step S302 the users 102 and 110 engage in an instant messaging conversation. As part of the instant messaging conversation instant messages are transmitted between the user terminals 104 and 112 across the network 106. The instant messages are transmitted in both directions, i.e. from the first user terminal 104 to the second user terminal 112 and from the second user terminal 112 to the first user terminal 104. In this sense the instant messaging conversation is a two-way conversation. The instant messaging conversation may include more than two users, as is known in the art, and the instant messages may be transmitted between any of the users in the conversation.

The instant messages in the conversation are transmitted over the network 106. In the preferred embodiments, the instant messages of the conversation are transmitted via the server 120 between the first and second user terminals 104 and 112. The instant messages of the conversation may also be additionally transmitted on a point-to-point route between the first and second user terminals 104 and 112 (i.e. a route that does not go via the server 120 or any other server in the communication system 100), as is known in the art. In order for the first user 102 to transmit an instant message via a point-to-point route to the second user 110, the first user terminal 104 retrieves the Internet Protocol address (IP address) of the second user terminal 112 from a server (which may or may not be the same server as server 120) or from another node in the network 106. The first user terminal 104 can then send instant messages direct to the IP address of the second user terminal 112 without sending the instant messages via the server 120 (or any other server in the communication system 100).

In step S304 the instant messages of the conversation are stored in the database 122. The server 120 can store a copy of the instant messages of the conversation in the database 122 as the instant messages are transmitted via the server 120 between the first and second user terminals 104 and 112. In this way, a copy of each instant message of the conversation is stored in the database 122. The instant messages transmitted from the first user terminal 104 to the second user terminal 112 in the conversation are stored in the database 122 as sent instant messages in a mailbox of the first user 102 and as received instant messages in a mailbox of the second user 110, and the instant messages transmitted from the second user terminal 112 to the first user terminal 104 in the conversation are stored in the database 122 as received instant messages in the mailbox of the first user 102 and as sent instant messages in the mailbox of the second user 110.

By sending the instant messages of a conversation over a route via the server 120 and over a point-to-point route there is provided a method of storing the full chat history for each user at the database 122, as well as an alternative transport mechanism for the instant messages to thereby allow different types of client to receive the instant messages.

In some alternative embodiments the instant messages of the conversation are not transmitted between the first and second user terminals 104 and 112 via the server 120, and are only transmitted via the point-to-point route over the network 106. In these embodiments, when the instant messages have been transmitted in the conversation, the client at the transmitting user terminal (or the client at the receiving user terminal) can send a copy of the transmitted instant messages to the server 120 so that the transmitted instant messages can be stored in the database 122, as described above.

In step S306 a read status message (or "consumption horizon message") for the conversation is transmitted from the first user terminal 104 to the server 120, said consumption horizon message indicates which of the instant messages of the conversation have been displayed to the first user 102. The consumption horizon messages can be considered as indicating which of the instant messages of a conversation have been read by the first user 102. The consumption horizon messages are periodically transmitted to the server 120 while the client 108 is online. Consumption horizon messages are generated for each conversation. Consumption horizon messages include a conversation ID, an instant message ID of the last message in the conversation to be displayed to the first user 102 and an ID of the first user 102.

In step S308 the consumption horizon messages are stored in the database 122. The database may replace old consumption horizon messages with new consumption horizon messages that are received for a particular conversation and for a particular user. In this way the database 122 can store the latest consumption horizon message received at the server 120 for each conversation for each user in the communication system 100.

Steps S306 and S308 of transmitting a read status message and storing the read status message are performed repeatedly while the first user 102 is using the first user terminal 104 to engage with the communication system 100.

Following step S308 the database 122 will store the instant messages transmitted in an instant messaging conversation and will also store a consumption horizon message for each user of the conversation.

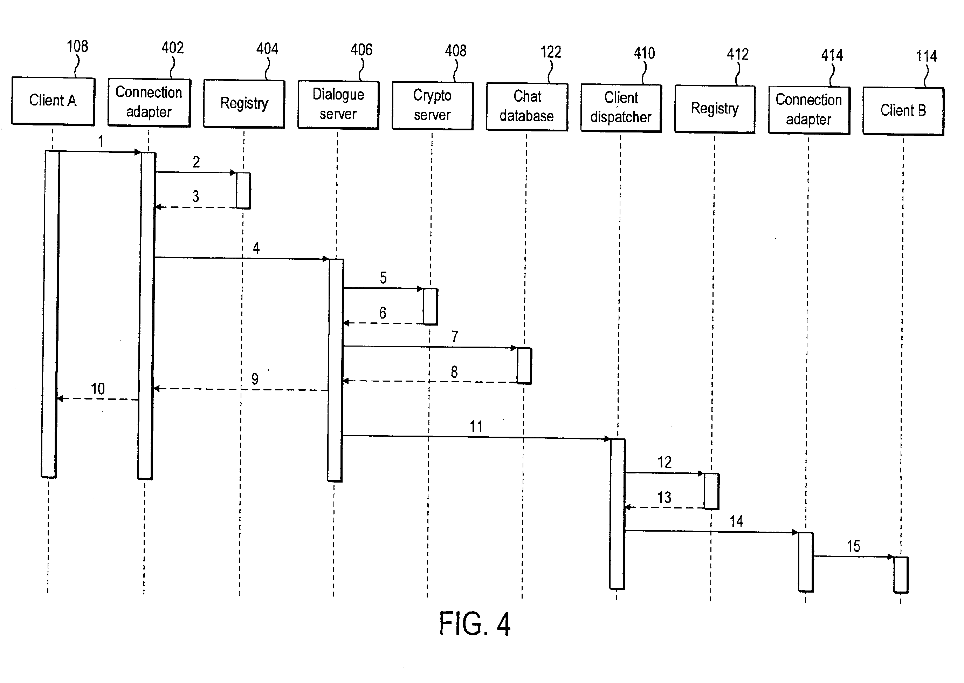

Figure 4 illustrates a method of transmitting an instant message from the client 108 at the first user terminal 104 to the client 114 at the second user terminal 112 according to a preferred embodiment. Figure 4 shows various elements of the communication system 100. In particular, Figure 4 shows the clients 108 and 114 of the user terminals 104 and 112. Figure 4 also shows first and second connection adapters 402 and 414, first and second registries 404 and 412, a dialogue server 406, a crypto server 408 the database 122 and a client dispatcher 410. The first and second connection adapters 402 and 414, the first and second registries 404 and 412, the dialogue server 406, the crypto server 408 the database 122 and the client dispatcher 410 are implemented at a server node (e.g. server 120), or in a plurality of server nodes in the network 106. The first and second registries 404 and 412 may be implemented as one single registry or as separate registries in the communication system 100.

The client 108 at the first user terminal 104 has a persistent connection with the first connection adapter 402 when the first user 102 is logged into the communication system 100 at the first user terminal 104. Similarly, the client 114 at the second user terminal 112 has a persistent connection with the second connection adapter 414 when the second user 110 is logged into the communication system 100 at the second user terminal 112. This enables instant messages to be pushed to the clients 108 and 114 at any time. This also enables the clients 108 and 114 to be addressed using the identity of the connection adapters 402 and 414 and the Transmission Control Protocol (TCP) connection.

The arrows marked 1 to 15 in Figure 4 show steps in the method of transmitting an instant message from the client 108 at the first user terminal 104 to the client 114 at the second user terminal 112, as described below.

In step 1 the client 108 sends an instant message to the connection adapter 402. The connection adapter 402 is used in this arrangement as a front end server to provision various back end services to the client 108. The instant message includes a service ID which indicates to the connection adapter 402 that the message is an instant message.

In step 2 the connection adapter 402 queries the registry 404 for the address in the communication system 100 of the dialogue server 406. In step 3 the registry 404 returns the address of the dialogue server 406 to the connection adapter 402.

In step 4 the connection adapter 402 provides the instant message (together with metadata, such as a timestamp and the identity of the first user 102 and the second user 110) to the dialogue server 406.

In step 5 the dialogue server 406 sends the instant message to the crypto server 408. The crypto server 408 encrypts the instant message and in step 6 returns the encrypted instant message to the dialogue server 406.

In step 7 the dialogue server 406 transmits the encrypted instant message to the database 122 for storage thereon. The instant message is stored as a sent message in user 102's mailbox and as a received message in user 110's mailbox on the database 122. The full chat history for the conversation is saved regardless of whether the second user 110 is offline or online in the communication system 100.

In steps 8, 9 and 10 a response message is transmitted from the database 122 to the client 108 at the first user terminal 104, via the dialogue server 406 and the connection adapter 402, indicating the status of the "store message" operation, i.e. whether the instant message has been stored at the database 122. If the client 108 does not receive an affirmative response message then the client 108 will resend the instant message in the conversation.

Figure 4 shows the scenario in which the second user 110 is online when the first user 102 transmits an instant message to the second user terminal 112 for the second user 110. In step 11 the dialogue server 406 sends a query to the client dispatcher 410 identifying the second user 110. This query may include the identity of the second user 110 which was received at the dialogue server 406 from the connection adapter 402 in step 4.

In step 12 the client dispatcher 410 queries the client registry 412 to determine which connection adapter the second user 110 is connected to and which TCP connection the second user 110 is connected to the connection adapter server on. In step 13 when the second user 110 is online in the communication system 100 then the client registry 412 replies to the client dispatcher 410 with the location of the second user 110 in the network 106. The location is defined by the address of the connection adapter 414 instance that the client 114 is connected to.

In step 14 the instant message is sent from the client dispatcher 410 to the connection adapter 414 identified in step 13, and in step 15 the instant message is sent from the connection adapter 414 to the client 114 at the second user terminal 112 over the TCP connection identified in step 13.

At the end of the method shown in Figure 4 an instant message has been transmitted from the client 108 at the first user terminal 104 to the client 114 at the second user terminal 112. The instant message has also been stored in the database 122.

It is noted that if the second user 110 is not online in the communication system 100 when an instant message, intended for the second user 110, is transmitted from the client 108, then the instant message is stored in the database 122 (e.g. by following steps 1 to 10 shown in Figure 4), but the message is not immediately transmitted to the second user terminal 112.

The first user 102 may, for example, start using the third user terminal 116. The first user 102 may then want to view his chat history over the communication system 100. Figure 5 shows a flow chart for a process of retrieving a chat history from the server 120 according to a preferred embodiment. In step S502 the first user logs into the communication system 100 at the third user terminal 116, using the client 118.

In step S504 a message update request is transmitted from the third user terminal 116 to a server, e.g. server 120, of the communication system 100. The message update request includes an ID of the first user 102 and a bookmark indicating the last instant message received by the client 118. In an implementation similar to that shown in Figure 4, the message update request may be transmitted from the third user terminal 116 to a connection adapter and the connection adapter may determine that the message is a message update request and then query a registry for the location in the network of the server 120. The connection adapter may then transmit the message update request to the server 120.

Step S504 in which the message update request is transmitted to the server 120 may be performed responsive to the first user 102 logging into the communication system 100 at the third user terminal 116 (as shown in Figure 5). Alternatively, step S504 in which the message update request is transmitted to the server 120 may be performed in response to a request received at the third user terminal 116 from the first user 102.

In response to receiving the message update request at the server 120, in step S506 the server 120 determines which (if any) of the instant messages stored in the database 122 have not been transmitted to the client 118 at the third user terminal 116. In order to do this the server 120 queries the database 122 for instant messages which are stored in user 102's mailbox in conjunction with the bookmark received in the message update request. The server 120 retrieves any instant messages for the user 102 from the database 122 which were transmitted in the conversation after the transmission of the instant message indicated by the bookmark. In this way, the chat history that has been sent after the time indicated by the bookmark is retrieved from the database 122. As described above, the database 122 also stores a consumption horizon message indicating which of the instant messages have already been displayed to the user 102 by other instances of the client used by user 102. The consumption horizon message for the user 102 in relation to the conversation for which instant messages have been retrieved from the database 122 is also retrieved from the database 122.

In step S508 the server 120 transmits the instant messages retrieved from the database 122 to the client 118 at the third user terminal 116 in step S508. The server 120 also transmits the consumption horizon message retrieved from the database 122 to the client 118 at the third user terminal 116. The transmission of the retrieved instant messages and the retrieved consumption horizon message may be via the connection adapter to which the client 118 at the third user terminal 116 is connected. After the instant messages are transmitted to the client 118 at the third user terminal 116 the instant messages are still stored in the database 122, such that the instant messages could be retrieved again subsequently if desired.

In step S510 the client 118 displays the instant messages received from the server 120 to the user 102 at the third user terminal 116. The instant messages can be displayed to the first user 102 in such a way that the first user can determine which of the instant messages have been displayed to him before (even if they were displayed to him by another instance of the client at another user terminal). This is achieved by using the information in the consumption horizon message received from the server 120 in response to the message update request.

Therefore, using the methods described above, the chat history, including the read status of the instant messages in a conversation can be synchronised over multiple instances of the client for a user. This is achieved in the preferred embodiments described above by storing the instant messages of a conversation, and the consumption horizon message for each user and for each conversation, in the database 122, whereby the database 122 is accessible by different user terminals in the communication system 100. For example, the database 122 is on the server 120 which is accessible by the first, second and third user terminals 104, 112 and 116, such that the first user 102 can access the database 122 from either the first or third user terminals 104 or 116, and the second user 110 can access the database 122 from the second user terminal 112 as described above.

While this invention has been particularly shown and described with reference to preferred embodiments, it will be understood to those skilled in the art that various changes in form and detail may be made without departing from the scope of the invention as defined by the appendant claims.

## Claims

1. An instant messaging method for communicating over a communication system (100) between a first user (102) at a first user terminal (104) of the communication system and a second user (110) at a second user terminal (112) of the communication system, the method comprising:
transmitting instant messages over the communication system in both directions between the first and second user terminals, wherein the instant messages constitute a conversation between the first and second users;
storing each instant message of the conversation in a store (122) at a server (120) of the communication system;
wherein the server is accessible from a third user terminal (116) of the communication system such that the first user can retrieve, at the third user terminal, each instant message of the conversation from the store; **characterised by**:
transmitting (S306) a read status message for the conversation from the first user terminal to the server, wherein the read status message indicates which of the instant messages of the conversation have been displayed to the first user; and
storing (S308) the read status message in the store.

2. The instant messaging method of claim 1 wherein said steps of transmitting a read status message and storing the read status message are performed repeatedly while the first user is using the first user terminal.

3. The instant messaging method of claim 1 or 2 wherein the read status message comprises: (i) an identifier of the conversation; (ii) an identifier of the last instant message of the conversation to be displayed to the first user; and (iii) an identifier of the first user.

4. The instant messaging method of any preceding claim further comprising the first user retrieving at least one of the instant messages of the conversation, at the third user terminal, from the store.

5. The instant messaging method of claim 4 wherein after the at least one of the instant messages of the conversation has been retrieved from the store, each instant message of the conversation is still stored at the server.

6. The instant messaging method of claim 4 or 5 wherein the step of the first user retrieving at least one of the instant messages of the conversation comprises:
transmitting (S504) a message update request from the third user terminal to the server, the message update request including a bookmark indication indicating the last instant message received at the third user terminal;
determining (S506) which of the instant messages of the conversation were transmitted in the conversation after the transmission of the instant message indicated by the bookmark indication; and
transmitting (S508) the determined instant messages from the server to the third user terminal.

7. The instant messaging method of claim 6 wherein said step of transmitting a message update request from the third user terminal to the server is performed responsive to the first user logging into (S502) the communication system using the third user terminal.

8. The instant messaging method of claim 6 or 7 wherein the message update request further includes an identifier of the first user.

9. The instant messaging method of any of claims 4 to 8 further comprising transmitting the read status message for the conversation from the server to the third user terminal, such that it can be determined at the third user terminal which of the instant messages of the conversation have been displayed to the first user.

10. A communication system (100) for providing instant messaging between a first user (102) and a second user (110), the communication system comprising:
a first user terminal (104), usable by the first user;
a second user terminal (112), usable by the second user;
a third user terminal (116), usable by the first user; and
a server (120) comprising a store (122) for instant messages,
wherein the communication system is configured to:
transmit instant messages in both directions between the first and second user terminals, wherein the instant messages constitute a conversation between the first and second users;
store each instant message of the conversation in the store at the server;
wherein the server is accessible from the third user terminal such that the first user can retrieve, at the third user terminal, each instant message of the conversation from the store.
**characterised in that** the communication system is further configured to :
transmit (S306) a read status message for the conversation from the first user terminal to the server, wherein the read status message indicates which of the instant messages of the conversation have been displayed to the first user; and
store (S308) the read status message in the store.

## Patentansprüche

1. Instant-Messaging-(Nachrichtensofortversand)-Verfahren zum Kommunizieren über ein Kommunikationssystem (100) zwischen einem ersten Benutzer (102) an einem ersten Benutzerterminal (104) des Kommunikationssystems und einem zweiten Benutzer (110) an einem zweiten Benutzerterminal (112) des Kommunikationssystems, wobei das Verfahren Folgendes beinhaltet:
Senden von Sofortnachrichten über das Kommunikationssystem in beiden Richtungen zwischen dem ersten und dem zweiten Benutzerterminal, wobei die Sofortnachrichten eine Konversation zwischen dem ersten und dem zweiten Benutzer bilden;
Speichern jeder Sofortnachricht der Konversation in einem Speicher (122) an einem Server (120) des Kommunikationssystems;
wobei der Server von einem dritten Benutzerterminal (116) des Kommunikationssystems aus zugängig ist, so dass der erste Benutzer am dritten Benutzerterminal jede Sofortnachricht der Konversation aus dem Speicher abrufen kann, **gekennzeichnet durch**:
Senden (S306) einer Lesestatusnachricht für die Konversation vom ersten Benutzerterminal zum Server, wobei die Lesestatusnachricht anzeigt, welche der Sofortnachrichten der Konversation dem ersten Benutzer angezeigt wurden; und
Speichern (S308) der Lesestatusnachricht im Speicher.

2. Instant-Messaging-Verfahren nach Anspruch 1, wobei die genannten Schritte des Sendens einer Lesestatusnachricht und des Speicherns der Lesestatusnachricht wiederholt ausgeführt werden, während der erste Benutzer das erste Benutzerterminal benutzt.

3. Instant-Messaging-Verfahren nach Anspruch 1 oder 2, wobei die Lesestatusnachricht Folgendes beinhaltet: (i) eine Kennung der Konversation; (ii) eine Kennung der letzten dem ersten Benutzer anzuzeigenden Sofortnachricht der Konversation; und (iii) eine Kennung des ersten Benutzers.

4. Instant-Messaging-Verfahren nach einem vorherigen Anspruch, das ferner beinhaltet, dass der erste Benutzer wenigstens eine der Sofortnachrichten der Konversation am dritten Benutzerterminal aus dem Speicher abruft.

5. Instant-Messaging-Verfahren nach Anspruch 4, wobei nach dem Abrufen der wenigstens einen der Sofortnachrichten der Konversation aus dem Speicher jede Sofortnachricht der Konversation weiter am Server gespeichert ist.

6. Instant-Messaging-Verfahren nach Anspruch 4 oder 5, wobei der Schritt des Abrufens von wenigstens einer der Sofortnachrichten der Konversation durch den ersten Benutzer Folgendes beinhaltet:
Senden (S504) einer Nachricht-Update-Anforderung vom dritten Benutzerterminal zum Server, wobei die Nachricht-Update-Anforderung eine Lesezeichenanzeige beinhaltet, die die letzte am dritten Benutzerterminal empfangene Sofortnachricht anzeigt;
Ermitteln (S506), welche der Sofortnachrichten der Konversation in der Konversation nach der von der Lesezeichenanzeige angezeigten Sofortnachricht gesendet wurde; und
Senden (S508) der ermittelten Sofortnachrichten vom Server zum dritten Benutzerterminal.

7. Instant-Messaging-Verfahren nach Anspruch 6, wobei der genannte Schritt des Sendens einer Nachricht-Update-Anforderung vom dritten Benutzerterminal zum Server als Reaktion darauf ausgeführt wird, dass sich der erste Benutzer mit dem dritten Benutzerterminal im Kommunikationssystem einloggt (S502).

8. Instant-Messaging-Verfahren nach Anspruch 6 oder 7, wobei die Nachricht-Update-Anforderung ferner eine Kennung des ersten Benutzers beinhaltet.

9. Instant-Messaging-Verfahren nach einem der Ansprüche 4 bis 8, das ferner das Senden der Lesestatusnachricht für die Konversation vom Server zum dritten Benutzerterminal beinhaltet, so dass am dritten Benutzerterminal ermittelt werden kann, welche der Sofortnachrichten der Konversation dem ersten Benutzer angezeigt wurden.

10. Kommunikationssystem (100) zum Bereitstellen von Instant Messaging (Sofortnachrichtenversand) zwischen einem ersten Benutzer (102) und einem zweiten Benutzer (110), wobei das Kommunikationssystem Folgendes umfasst:
ein erstes Benutzerterminal (104), das vom ersten Benutzer benutzt werden kann;
ein zweites Benutzerterminal (112), das vom zweiten Benutzer benutzt werden kann;
ein drittes Benutzerterminal (116), das vom ersten Benutzer benutzt werden kann; und
einen Server (120), der einen Speicher (122) für Sofortnachrichten umfasst,
wobei das Kommunikationssystem konfiguriert ist zum:
Senden von Sofortnachrichten in beiden Richtungen zwischen dem ersten und dem zweiten Benutzerterminal, wobei die Sofortnachrichten eine Konversation zwischen dem ersten und dem zweiten Benutzer bilden;
Speichern jeder Sofortnachricht der Konversation in dem Speicher am Server;
wobei der Server vom dritten Benutzerterminal aus zugängig ist, so dass der erste Benutzer am dritten Benutzerterminal jede Sofortnachricht der Konversation aus dem Speicher abrufen kann,
**dadurch gekennzeichnet, dass** das Kommunikationssystem ferner konfiguriert ist zum:
Senden (S306) einer Lesestatusnachricht für die Konversation vom ersten Benutzerterminal zum Server, wobei die Lesestatusnachricht anzeigt, welche der Sofortnachrichten der Konversation dem ersten Benutzer angezeigt wurden; und
Speichern (S308) der Lesestatusnachricht im Speicher.

## Revendications

1. Un procédé de messagerie instantanée pour communiquer par un système de communication (100) entre un premier utilisateur (102) à un premier terminal d'utilisateur (104) du système de communication et un deuxième utilisateur (110) à un deuxième terminal d'utilisateur (112) du système de communication, le procédé comprenant :
la transmission de messages instantanés par le système de communication dans les deux directions entre les premier et deuxième terminaux d'utilisateur, dans lequel les messages instantanés constituent une conversation entre un premier utilisateur et un deuxième utilisateurs ;
la mémorisation de chaque message instantané de la conversation dans une mémoire de messages (122) sur un serveur (120) du système de communication ;
dans lequel le serveur est accessible à partir d'un troisième terminal d'utilisateur (116) du système de communication de telle sorte que le premier utilisateur peut retrouver, au troisième terminal d'utilisateur, chaque message instantané de la conversation dans la mémoire de messages ; **caractérisé par** :
la transmission (S306) d'un message à l'état lu de la conversation depuis le premier terminal d'utilisateur vers le serveur, dans lequel le message à l'état lu indique lesquels des messages instantanés de la conversation ont été visualisés par le premier utilisateur ; et
la mémorisation (S308) du message à l'état lu dans la mémoire de messages.

2. Le procédé de messagerie instantanée selon la revendication 1 dans lequel lesdites étapes de transmission d'un message à l'état lu et de mémorisation du message à l'état lu sont exécutées de manière répétée pendant que le premier utilisateur utilise le premier terminal d'utilisateur.

3. Le procédé de messagerie instantanée selon la revendication 1 ou 2 dans lequel le message à l'état lu comprend : (i) un identifiant de la conversation ; (ii) un identifiant du dernier message instantané de la conversation à visualiser par le premier utilisateur ; et (iii) un identifiant du premier utilisateur.

4. Le procédé de messagerie instantanée selon l'une quelconque des revendications précédentes comprenant en plus le premier utilisateur retrouvant au moins un des messages instantanés de la conversation, au troisième terminal d'utilisateur, dans la mémoire de messages.

5. Le procédé de messagerie instantanée selon la revendication 4 dans lequel après que le au moins un des messages instantanés de la conversation a été retrouvé dans la mémoire de messages, chaque message instantané de la conversation est encore mémorisé sur le serveur.

6. Le procédé de messagerie instantanée selon la revendication 4 ou 5 dans lequel l'étape du premier utilisateur retrouvant au moins un des messages instantanés de la conversation comprend :
la transmission (S504) d'une demande de mise à jour du message depuis le troisième terminal d'utilisateur vers le serveur, la demande de mise à jour du message incluant un signet indiquant que la réception du dernier message instantané au troisième terminal d'utilisateur ;
la détermination (S506) de quels des messages instantanés de la conversation ont été transmis dans la conversation après l'indication de la transmission du message instantané par the signet ; et
la transmission (S508) des messages instantanés déterminés depuis le serveur vers le troisième terminal d'utilisateur.

7. Le procédé de messagerie instantanée selon la revendication 6 dans lequel ladite étape de transmission d'une demande de mise à jour du message depuis le troisième terminal d'utilisateur vers le serveur est exécutée en réponse au premier utilisateur se connectant dans (S502) le système de communication en utilisant le troisième terminal d'utilisateur.

8. Le procédé de messagerie instantanée selon la revendication 6 ou 7 dans lequel la demande de mise à jour du message inclut en plus un identifiant du premier utilisateur.

9. Le procédé de messagerie instantanée selon l'une quelconque des revendications 4 à 8 comprenant en plus la transmission du message à l'état lu de la conversation depuis le serveur vers le troisième terminal d'utilisateur, de telle sorte qu'il peut être déterminé au troisième terminal d'utilisateur lesquels des messages instantanés de la conversation ont été visualisés par le premier utilisateur.

10. Un système de communication (100) pour fournir une messagerie instantanée entre un premier utilisateur (102) et un deuxième utilisateur (110), le système de communication comprenant :
un premier terminal d'utilisateur (104), utilisable par le premier utilisateur ;
un deuxième terminal d'utilisateur (112), utilisable par le deuxième utilisateur ;
un troisième terminal d'utilisateur (116), utilisable par le premier utilisateur ; et
un serveur (120) comprenant une mémoire de messages (122) pour les messages instantanés,
dans lequel le système de communication est configuré pour :
transmettre des messages instantanés dans les deux directions entre les premier et deuxième terminaux d'utilisateur, dans lequel les messages instantanés constituent une conversation entre le premier et le deuxième utilisateurs ; et
mémoriser chaque message instantané de la conversation dans la mémoire de messages sur le serveur,
dans lequel le serveur est accessible à partir du troisième terminal d'utilisateur de telle sorte que le premier utilisateur peut retrouver, au troisième terminal d'utilisateur, chaque message instantané de la conversation dans la mémoire de messages ;
**caractérisé en ce que** le système de communication est configuré en plus pour :
transmettre (S06) un message à l'état lu de la conversation à partir du premier terminal d'utilisateur vers le serveur, dans lequel le message à l'état lu indique lesquels des messages instantanés de la conversation ont été visualisés par le premier utilisateur ; et
mémoriser (S08) le message à l'état lu dans la mémoire de messages.
